**Europäisches Patentamt**

**European Patent Office**

**Office européen des brevets**

(19)

(11) Veröffentlichungsnummer: **0 129 810**
**B1**

(12) **EUROPÄISCHE PATENTSCHRIFT**

(45) Veröffentlichungstag der Patentschrift:
**14.09.88**

(21) Anmeldenummer: **84106913.1**

(22) Anmeldetag: **16.06.84**

(51) Int. Cl.⁴: **G 05 D 1/08**, B 63 B 39/06

(54) **Verfahren zum Stabilisieren eines Seeschiffs mit einem Schiffsruder.**

(30) Priorität: **23.06.83 DE 3322505**

(43) Veröffentlichungstag der Anmeldung:
**02.01.85 Patentblatt 85/1**

(45) Bekanntmachung des Hinweises auf die Patenterteilung:
**14.09.88 Patentblatt 88/37**

(84) Benannte Vertragsstaaten:
**BE DE FR GB NL SE**

(56) Entgegenhaltungen:
**DE - A - 2 340 386**
**DE - A - 2 502 672**
**DE - A - 3 113 933**
**US - A - 3 886 884**
**US - A - 4 380 206**

**O+P KONSTRUKTIONS-HANDBUCH 79/80 Band 23, Nr. 10B, 1979, Mainz, "Einsatz und Betrieb von Hydrospeichern" Seiten 33-36**

(73) Patentinhaber: **BLOHM + VOSS AG, Hermann-Blohm Strasse 3, D-2000 Hamburg 11 (DE)**

(72) Erfinder: **Ehluss, Heinz-Günter, Am Moor 57, D-2082 Tornesch (DE)**
Erfinder: **Oldach, Uwe, Ottensweide 15, D-2102 Hamburg 93 (DE)**
Erfinder: **Wessel, Erich, Oldenburger Strasse 44, D-2000 Hamburg 54 (DE)**

(74) Vertreter: **Hansmann, Dierk, Dipl.-Ing., Jessenstrasse 4, D-2000 Hamburg 50 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zum Stabilisieren eines Seeschiffes gegen Rollbewegungen durch hin- und hergehende Schwenkbewegungen des Schiffsruders, welches durch eine hydraulische Rudermaschine bewegt wird, wobei die Schwenkbewegungen zur Stabilisierung mit höherer Drehgeschwindigkeit als bei dem gewöhnlichen Ruderlegen durchzuführen sind, die Bewegung des Ruders und die Einstellung eines Ruderwinkels durch eine beeinflussbare Zuführung eines hydraulischen Mediums zu der Rudermaschine gesteuert wird und die Steuerung der Zuführung in Abhängigkeit von der am Ruderstand zur Haltung des Kurses gewählten Ruderstellung und von den durch einen Rollsensor ermittelten Rollbewegungen erfolgt.

Aus US-A-4 380 206 ist beispielsweise ein Vorschlag bekannt, mit Hilfe von Ruderbewegungen ein Schiff gegen das Rollen in Folge der Einflüsse von Wind und Wellen zu stabilisieren. Die jeweilige Bewegung der Ruder erfolgt über hydraulische Rudermaschinen, denen ein hydraulisches Medium von Pumpen zugeführt wird, die elektrisch in Abhängigkeit von der gewählten Ruderlage und den auftretenden Rollbewegungen geregelt werden.

Eine derartige Einrichtung erfordert jedoch Pumpen mit einer verhältnismässig grossen Maximalleistung, da für die Stabilisierung gegen Rollbewegungen grössere Winkelgeschwindigkeiten der Ruder notwendig sind, als bei den zur Steuerung üblichen Rudereinrichtungen. Für die notwendigen grossen Pumpen, die nur gelegentlich und kurzzeitig mit voller Leistung beaufschlagt werden, muss an Bord ständig eine genügende Energiereserve bereitgehalten werden. Da die Pumpen zum Steuern und auch überwiegend zum Stabilisieren nur eine geringere Leistung abzugeben brauchen, arbeiten sie meistens in einem Bereich, in dem ihr Wirkungsgrad nicht optimal ist.

Aus Sicherheitsgründen werden Seeschiffe heute häufig mit zwei alternativ einsetzbaren Antriebssystemen für die Rudermaschine ausgerüstet, die beide hydraulisch sein können. Ein solches herkömmliches System besteht z.B. aus einer Förderpumpe, die dauernd Hydrauliköl aus einem Tank ansaugt und aus einem Steuerventil, welches in drei Stellungen bewegbar ist, nämlich zur Rückführung des Öls von der Pumpe in den Tank bei feststehenden Ruder und zur Zu- und Rückleitung des Öls zu der Rudermaschine, um das Ruder in die eine oder andere Richtung zu drehen, bis die gewünschte Ruderstellung erreicht ist. An den Leitungen sind Sicherheits- und Rückschlagventile vorgesehen, durch die verhindert werden soll, dass das Ruder z.B. infolge einer undichten Hydraulikleitung ausser Kontrolle gerät. Bei einer solchen bekannten Einrichtung ist beispielsweise eine Drehgeschwindigkeit des Ruders von 0,087 rad/sec entsprechend etwa 5 Grad pro Sekunde üblich, und es ist ein Ruderbereich von etwa 35 bis 40° nach jeder Seite gefordert, der auch für Manöver bei langsamer Fahrt notwendig ist, der aber bei normaler Dienst- oder Fahrgeschwindigkeit auf See nicht voll genutzt werden kann, da schon vor Erreichen des maximalen Winkels die Strömung an der Hinterkante des Ruders abreissen würde. Hiervon abgesehen, erfordern relativ grosse Schwenkwinkel zum Stabilisieren bei Dienstgeschwindigkeit auch grosse Ruderkräfte, die von den üblichen Ruderantrieben nicht aufgebracht werden können.

Weiterhin ist nach DE-A-2 502 672 ein hydraulischer Arbeitskreis mit einer speichergestützten Pumpe bekannt geworden. Hierbei sind keine Hinweise gegeben, ein Ruder in einem gewissen Schwenkwinkel zu belassen, um diesen Stillstand zum Speichern des hydraulischen Mediums auszunutzen.

Der Erfindung liegt die Aufgabe zugrunde, ein Verfahren zum Stabilisieren von Seeschiffen mittels Rudern, die von hydraulischen Rudermaschinen angetrieben werden, zu schaffen und insbesondere das hierfür erforderliche hydraulische System so auszubilden und zu betreiben, dass auch die zum Stabilisieren erforderlichen schnellen Ruderbewegungen energiesparend erfolgen können.

Zur Lösung der Aufgabe wird erfindungsgemäss vorgeschlagen, dass die Zuführung des hydraulischen Mediums zur Rudermaschine über eine Steuereinrichtung aus einem Drucksystem erfolgt, in das das hydraulische Medium ständig bis zum Erreichen eines vollen Betriebsdruckes gefördert und in dem es während eines Stillstandes des Ruders bei dem gewöhnlichen Ruderlegen, als auch nach einer Schwenkbewegung beim Verbleiben des Ruders in einem gewissen Winkel gespeichert wird und dass für eine Bewegung des Ruders das hydraulische Medium über die geöffnete Steuereinrichtung gleichzeitig aus dem gespeicherten Volumen und aus der ständigen Förderung zugeführt wird, wobei der Ruderbereich, in dem auch stabilisierende Schwenkbewegungen durchgeführt werden können, kleiner ist als der vom Ruderstand aus einstellbare zur Steuerung des Seeschiffes geforderte maximale Ruderbereich.

Hierdurch kann der Stillstand des Ruders zum Speichern des hydraulischen Mediums ausgenutzt werden, um kurzzeitige Spitzenbelastungen auszugleichen.

Weiterhin ist vorgesehen, dass zur Einstellung der Schwenkgeschwindigkeit und des Schwenkwinkels des Ruders die Zuführung des hydraulischen Mediums aus dem Drucksystem in bezug auf Durchflusszeit, Durchflussstrom und Durchflussrichtung in der Steuereinrichtung gesteuert wird.

Zur Verstärkung der Wirkung des Ruders wird vorgeschlagen, dass ein Ruderblatt verwendet wird, an dessen hinterer Kante eine entsprechend der Ruderstellung zusätzlich bewegte, mechanisch mit dem Ruderblatt gekoppelte Flosse angeordnet ist. Hierdurch wird die Wirkung des Ruderblattes bei einem in der Rudermaschine und somit auch am Ruderblatt eingestellten Ruderwinkel vergrössert bzw. kann für eine bestimmte Ruderwirkung der Schwenkwinkel der Rudermaschine und des Ruderblattes kleiner gehalten werden, so dass auch die Zeit für die Zuführung des hydraulischen Mediums bis zum Erreichen dieses Schwenkwinkels kürzer ist.

Das erfindungsgemässe Verfahren ist sowohl zur Rollstabilisierung als auch zum Steuern geeignet. Es kann daher bei einem zweiten Antriebssystem für die Rudermaschine, welches aus Sicherheitsgründen zusätzlich zu einem herkömmlichen Antriebssystem zweckmässig ist, eingesetzt werden.

Weitere Einzelheiten der Erfindung werden anhand der beigefügten schematischen Zeichnung beschrieben: Es zeigen

Figur 1 ein Schaubild des erfindungsgemässen Systems,

Figur 2 ein vereinfachtes Schaubild für ein erfindungsgemässes hydraulisches System für ein Schiff mit Doppelrudern und zusätzlichen herkömmlichen Systemen für jede der beiden Rudermaschinen,

Figur 3 ein vereinfachtes Diagramm, das die Verhältnisse zwischen der Rolltendenz eines unstabilisierten Schiffes und den Bewegungen des Ruders zur Kompensierung der Rolltendenz zeigt.

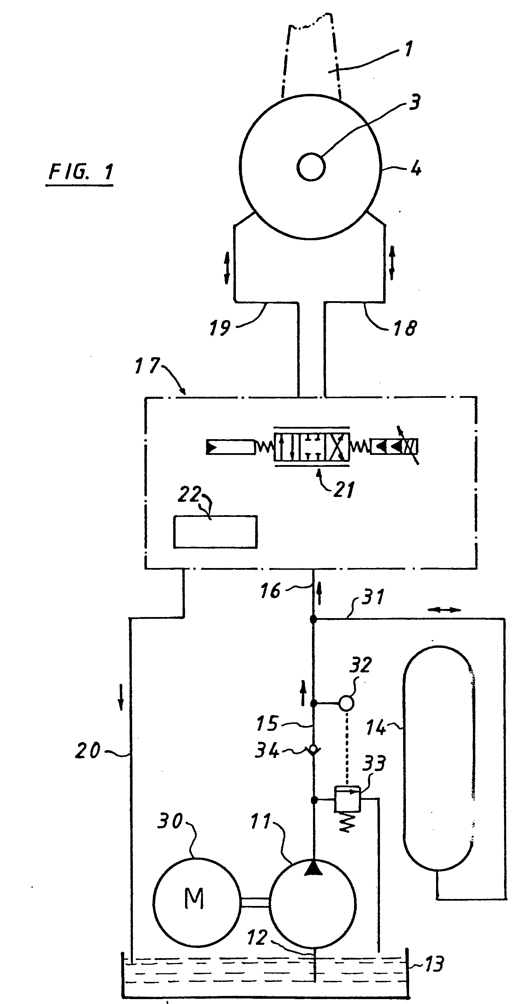

In Figur 1 ist ein Teil eines Ruders 1 nur teilweise in strichpunktierten Linien gezeigt. Der Ruderschaft 3 sitzt in einer Rudermaschine 4, die hier als Flügelschwenkantrieb angedeutet ist.

Das System umfasst eine Pumpe 11 mit konstanter Förderleistung, die mit einem Tank 13 durch eine Saugleitung 12 verbunden ist. Die Pumpe 11 wird durch einen Motor 30 angetrieben. Die Förderleitung 15 ist über eine Verbindungsleitung 31 mit einem Druckspeicher 14 verbunden. Pumpe 11 und Speicher 14 können das hydraulische Medium über eine Förderleitung 16 zu einer Steuereinrichtung 17 fördern, die über Leitungen 18, 19 mit der Rudermaschine 4 verbunden ist. Wenn die Rudermaschine 4 in Betrieb ist, ist eine der Leitungen 18, 19 die Zuführungsleitung und die andere die Ablaufleitung, je nach der Richtung der Ruderbewegung. Das zurückfliessende Medium wird über die Steuereinrichtung in eine Ablaufleitung 20 und weiter in den Tank 13 zurückgeführt.

Die Steuereinrichtung 17 enthält ein lagegeregeltes Proportional-Wegeventil 21 (proportional control valve) und eine Ablauf-Druckwaage 22 (load compensation device), die im Prinzip zur Steuerung des Durchflusses eines flüssigen Mediums bekannt sind. Das Ventil 21 wird durch elektrische Signale von einer nicht gezeigten elektrischen Schaltung und in Abhängigkeit von Signalen zur Steuerung und zur Reduzierung der Rollbewegungen gesteuert. Mittels eines hydraulischen Servomotors, der in der Ventileinrichtung 21 enthalten ist, wird das Ventil geöffnet oder in eine Stellung gebracht, in welcher es den Durchfluss des hydraulischen Mediums in der einen oder anderen Richtung steuert und in welcher es mehr oder weniger geöffnet ist, um die Durchflussmenge in Abhängigkeit von dem elektrischen Signal zu regeln. Die Ablauf-Druckwaage 22 ist zusätzlich in der Lage, Menge und Druck des aus der Rudermaschine 4 zurückfliessenden hydraulischen Mediums zu steuern und hierbei auf das Ruder wirkende veränderliche Belastungen oder Kräfte durch Wellen oder Seeschlag auszugleichen, so dass die Drehgeschwindigkeit des Ruders ausschliesslich durch den Zufluss des Mediums von der speichergestützten Pumpe 11 und entsprechend der Einstellung des Ventils 21 erfolgt.

Die Steuereinrichtung 17 enthält weitere Ventile wie Rückschlag- und Verteilventile und Sicherheitseinrichtungen, die das Ventil 21 in eine neutrale Position zurückstellen, wenn irgendeine Störung eintritt. Diese Einrichtungen sind in den Figuren nicht dargestellt, da sie in einer dem Fachmann geläufigen Weise ausgeführt und angeordnet werden können.

Die Förderpumpe 11 liefert kontinuierlich hydraulisches Medium in die Förderleitung 15 durch ein Rückschlagventil 34. Wenn der volle Betriebsdruck erreicht ist, wird durch einen Druckmesser 32 ein Druckentlastungsventil 33 geöffnet und der Förderstrom in den Tank 13 drucklos zurückgeführt, so dass die Pumpe im Leerlauf läuft.

Wenn für eine Schwenkung des Ruders 1 das Ventil 21 geöffnet wird, fliesst das hydraulische Medium in eine Kammer bzw. in eine Gruppe von Kammern der Rudermaschine 4, wobei von Beginn an der volle Betriebsdruck von beispielsweise 150 bar aus dem Speicher 14 wirksam ist. Während der Bewegung der Rudermaschine 4 wird der Betriebsdruck im wesentlichen durch die Förderung der Pumpe 11 zusätzlich zu der Lieferung aus dem Speicher 14 aufrechterhalten. Nach einer Ruderbewegung wird der Speicher 14 wieder durch die Pumpe 11 aufgefüllt.

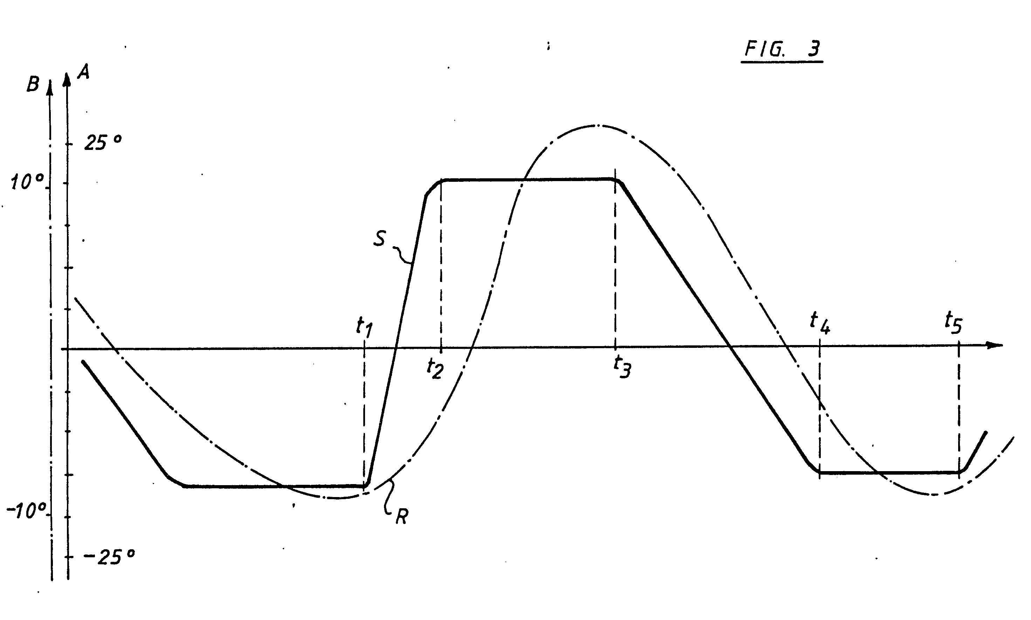

Wie Fig. 3 zeigt, haben Bewegungen des Ruders der Rolltendenz des Schiffes vorauszueilen, aber nach einer Schwenkbewegung verbleibt das Ruder in einem gewissen Winkel bevor die nächste Bewegung eingeleitet wird. Das Diagramm zeigt in strichpunktierten Linien einen möglichen Winkel B beispielsweise der Rollneigung eines unstabilisierten Schiffes, von dem angenommen sei, dass es entsprechend der Kurve R während einer bestimmten Zeit T rollt. Um durch die Rollstabilisierung mittels des Ruders diese Rollneigung auszugleichen oder wenigstens zu dämpfen wird angenommen, dass das Ruder jeweils in einen Ruderwinkel A zu legen ist und in der dargestellten Zeit entsprechend der in ausgezogener Linie dargestellten Kurve S bewegt und festgehalten werden muss.

In einem bestimmten Augenblick $t_1$ ist das Ruder in einen Winkel von 20° nach Backbord zu legen, und zwar mit einer solchen Drehgeschwindigkeit, das der Winkel in dem Augenblick $t_2$ erreicht ist. In dieser Stellung bleibt das Ruder bis zu dem Augenblick $t_3$, in dem eine entgegengesetzte Bewegung nach Steuerbord erforderlich wird usw. In der Zeit zwischen $t_1$ und $t_2$ ist die Steuereinrichtung 17 geöffnet, um einen Zufluss des hydraulischen Mediums von der Pumpe 11 und von dem Speicher 14 zu der Rudermaschine 4 in der Weise zu bewirken, dass in dem Augenblick $t_2$ das Ruder in der erforderlichen Position angehalten wird, wobei die Ruderdrehgeschwindigkeit durch die in der Steuereinrichtung 17 eingestellte Durchflussmenge bestimmt wird. In dem Zeitraum zwischen $t_2$ und $t_3$ wird der Speicher wieder auf den vollen Arbeitsdruck durch die Pumpe 11 aufgefüllt.

Die Rollfrequenz, bei der eine Rollstabilisierung wünschenswert ist, liegt üblicherweise etwa bei 8 bis 10 Sekunden aber es sind auch Frequenzen zwischen 3 und 30 Sekunden möglich. Die Ruderstellung muss also in verhältnismässig kurzen zeitlichen Abständen verändert werden, wobei Drehgeschwindigkeiten von bis zu 45°/s möglich sein sollen. Dies führt zu grossen Ruderdrehmomenten und einem hohen Energieverbrauch während der Bewegung der Ruder. Durch die Kombination von einer Pumpe mit konstanter Förderung mit einem Druckspeicher kann die Förderleistung der Pumpe erfindungsgemäss auf etwa 50% der Abgabeleistung an die Rudermaschine zur Bewirkung einer maximalen Ruderbewegung vermindert werden, da die übrigen 50% der maximalen Abgabe von dem Druckspeicher geliefert werden können, dessen Kapazität entsprechend zu wählen ist.

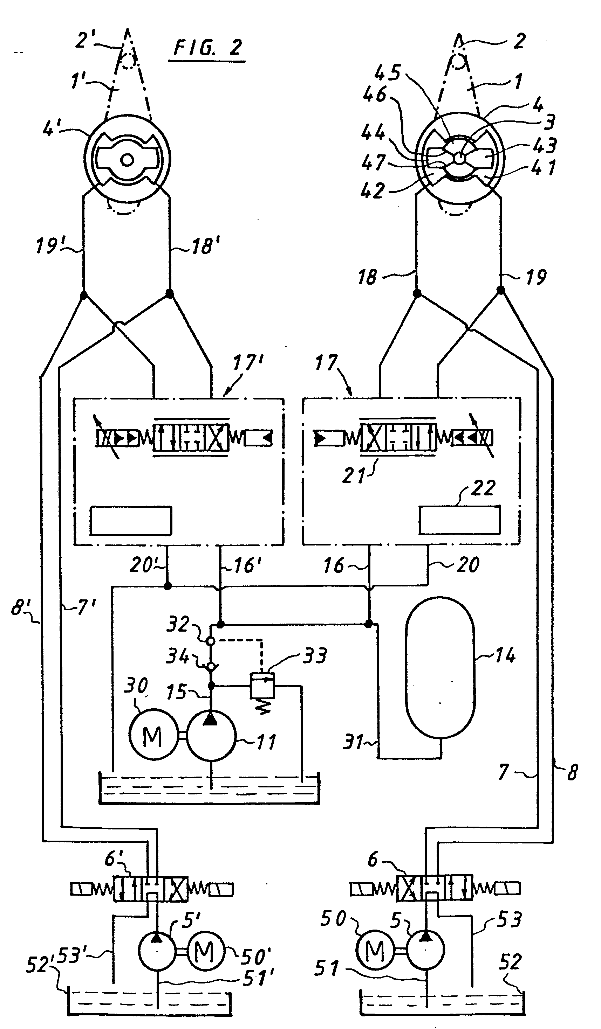

In Fig. 2 ist die Anwendung der Erfindung bei einer Doppelruderanlage dargestellt. Die Teile sind im wesentlichen dieselben wie zuvor für ein einzelnes Ruder beschrieben, einige Bezugsziffern, die den Teilen des zweiten Ruders zugeordnet werden, sind jedoch mit einem zusätzlichen Strich bezeichnet, wie beispielsweise Ruder 1'. Wie aus Fig. 2 entnommen werden kann, ist für jedes der Ruder 1, 1' eine Steuereinrichtung 17, 17' vorgesehen, aber das hydraulische Medium kann durch eine einzige Pumpe 11, die durch einen Druckspeicher 14 unterstützt wird, geliefert werden.

Fig. 2 zeigt einen aus Sicherheitsgründen zweckmässigen weiteren Ruderantrieb herkömmlicher Art für jedes der beiden Ruder, der für normale Ruderbewegungen zum Steuern über den vollen Ruderwinkel jedoch mit einer geringen Ruderdrehgeschwindigkeit ausgelegt ist. Dieser weitere Ruderantrieb umfasst eine Förderpumpe 5, 5', ein elektrisch betätigtes Steuerventil 6, 6', das Durchflusszeit und Durchflussrichtung des hydraulischen Mediums zu und von der Rudermaschine 4, 4' durch Leitungen 7, 7' und 8, 8', steuert, die mit entsprechenden Leitungen 18, 18' und 19, 19' an der Rudermaschine 4, 4' verbunden sind. Weitere in diesen Leitungen zweckmässige Ventile sind nicht dargestellt, da ihre Anordnung allgemein bekannt und zum Teil auch vorgeschrieben ist. Die Pumpe 5, 5' wird durch einen Motor 50, 50' angetrieben und ist mit einer Saugleitung 51, 51' versehen, die in einem Tank 52, 52' beginnt. Eine Abflussleitung 53, 53' ist mit dem Ventil 6, 6' verbunden. Dieser weitere Ruderantrieb kann abwechselnd mit der erfindungsgemässen Einrichtung eingesetzt werden, wenn beispielsweise eine Stabilisierung nicht erforderlich ist.

In Fig. 2 sind einige weitere Einzelheiten der Rudermaschine 4 dargestellt, die ähnlich auch bei der Rudermaschine 4 nach Fig. 1 ausgeführt sein können. Die vorzugsweise als Flügelschwenkantrieb ausgeführte Rudermaschine enthält wenigstens zwei Kammern 41 und 42, in welchen zwei Kolben 43 und 44 hin- und herdrehbar sind. Leitungen 46, 47 sind über Kreuz durch das drehbare Mittelteil 45 angeordnet, das sich auf dem Ruderschaft 3 befindet, um den Teil einer Kammer, z.B. 41, vor dem Kolben, z.B. 43, mit dem Teil der anderen Kammer, z.B. 42, hinter dem Kolben, z.B. 44, zu verbinden, so dass unter Druck stehendes hydraulisches Medium, welches über die Leitung 19 zugeführt wird, in die Kammer 41 vor dem Kolben 43 und in die Kammer 42 hinter dem Kolben 44 eintritt und hierdurch das Ruder entgegengesetzt dem Uhrzeigersinn dreht. Dabei wird hydraulisches Medium aus den anderen Teilen der Kammern über die Leitung 18 verdrängt und fliesst über die Steuereinrichtung 17 ab.

Die Ruder 1, 1', die in Fig. 2 dargestellt sind, sind mit Flossen 2, 2' versehen, die etwa um vertikale Achsen drehbar an den hinteren Enden der Ruderblätter angeordnet sind, mit denen sie mechanisch in der Weise gekoppelt sind, dass die Flosse am Ruderblatt zusätzlich zur Bewegung des Ruderblattes in dieselbe Richtung geschwenkt wird.

Für ein bestimmtes Schiff wurde eine Anlage mit Doppelrudern, wie in Fig. 2 dargestellt, beispielsweise berechnet. Dabei wurde für eine durch einen Speicher 14 unterstützte Pumpe 11 mit konstanter Fördermenge eine notwendige elektrische Antriebsleistung von 122 kW ermittelt, während für jede der beiden Pumpen 5, 5' nur eine elektrische Antriebsleistung von 20,4 kW für erforderlich gehalten wurde. Die Berechnung zeigte, dass für eine Rollstabilisierung mittels Ruders die an Bord bereitzuhaltende Energie für die Ruderbewegung erheblich höher ist als die üblicherweise für das Steuern notwendige Energie. Insbesondere an Bord eines Schiffes sind aber kurzzeitige Spitzenbelastungen der Energieversorgung nur schwer auszugleichen. Die Verwendung einer speichergestützten Pumpe 11 in Verbindung mit der Steuereinrichtung 17 ist daher auch für die Energieversorgung an Bord eines Schiffes vorteilhaft. Sie ergibt eine gleichmässigere Belastung, so dass nicht nur die Pumpe 11 selbst in ihrem optimalen Arbeitsbereich betrieben werden kann. Auch die erfindungsgemässen Massnahmen zur Begrenzung des Schwenkwinkels bei einer schnellen Ruderbewegung tragen dazu bei, den maximalen Energiebedarf herabzusetzen. Für die Einleitung einer Schwenkbewegung zum Stabilisieren ist es vorteilhaft, dass beim Öffnen des Ventils 21 der Steuereinrichtung 17 stets der volle Betriebsdruck am Beginn der Ruderbewegung zur Verfügung steht.

**Patentansprüche**

1. Verfahren zum Stabilisieren eines Seeschiffes gegen Rollbewegungen durch hin- und hergehende Schwenkbewegungen des Schiffsruders (1), welches durch eine hydraulische Rudermaschine (4) bewegt wird, wobei die Schwenkbewegungen zur Stabilisierung mit höherer Drehgeschwindigkeit als bei dem gewöhnlichen Ruderlegen durchzuführen sind, die Bewegung des Ruders (1) und die Einstellung eines Ruderwinkels durch eine beeinflussbare Zuführung eines hydraulischen Mediums zu der Rudermaschine (4) gesteuert wird und die Steuerung der Zuführung in Abhängigkeit von der am Ruderstand zur Haltung des Kurses gewählten Ruderstellung und von den durch einen Rollsensor ermittelten Rollbewegungen erfolgt, dadurch gekennzeichnet, dass die Zuführung des hydraulischen Mediums zur Rudermaschine (4) über eine Steuereinrichtung (17) aus einem Drucksystem erfolgt, in das das hydraulische Medium ständig bis zum Erreichen eines vollen Betriebsdruckes gefördert und in dem es während eines Stillstandes des Ruders (1) bei dem gewöhnlichen Ruderlegen, als auch nach einer Schwenkbewegung beim Verbleiben der Ruders (1) in einem gewissen Winkel gespeichert wird und dass für eine Bewegung des Ruders (1) das hydraulische Medium über die geöffnete Steuereinrichtung (17) gleichzeitig aus dem gespeicherten Volumen (14) und aus der ständigen Förderung zugeführt wird, wobei der Ruderbereich, in dem auch stabilisierende Schwenkbewegungen durchgeführt werden können, kleiner ist als der vom Ruderstand aus einstellbare, zur Steuerung des Seeschiffes geforderte maximale Ruderbereich.

2. Verfahren nach Anspruch 1, dadurch gekennzeichnet, dass zur Einstellung der Schwenkgeschwindigkeit und des Schwenkwinkels des Ruders (1) die Zuführung des hydraulischen Mediums aus dem Drucksystem in bezug auf Durchflusszeit, Durchflussstrom und Durchflussrichtung in der Steuereinrichtung (17) gesteuert wird.

3. Verfahren nach einem der Ansprüche 1 oder 2, dadurch gekennzeichnet, dass ein Ruderblatt (1) verwendet wird, an dessen hinterer Kante eine entsprechend der Ruderstellung zusätzlich bewegte, mechanisch mit dem Ruderblatt (1) gekoppelte Flosse (2) angeordnet ist.

## Claims

1. Method of stabilising a seagoing ship from rolling movements by backwards and forwards swivelling movements of the ship's rudder (1), which is moved by a hydraulic steering machine (4), the swivelling movements for the stabilisation being carried out at a higher speed of rotation than for usual positioning of the rudder, the movement of the rudder (1) and the adjustment of a rudder angle being controlled by the influenceable supply of a hydraulic medium to the steering machine (4) and the supply being controlled as a function of the rudder position chosen on the rudder status to maintain the course and on the rolling movements determined by a roll sensor, characterised in that the supply of the hydraulic medium to the steering machine (4) is via a control device (17) consisting of a pressure system into which the hydraulic medium is continuously delivered until a full operating pressure is reached and in which it is stored during an immobilisation of the rudder (1), during the usual positioning of the rudder and also after a swivelling movement while the rudder (1) remains at a certain angle, and in that for a movement of the rudder (1), the hydraulic medium is fed via the opened control device (17) simultaneously from the stored volume (14) and from the continuous delivery, the rudder range in which stabilising swivelling movements can also be carried out being smaller than the maximum rudder range, adjustable from the rudder status, required for steering of the seagoing ship.

2. Method according to claim 1, characterised in that to adjust the swivelling speed and the swivelling angle of the rudder (1), the supply of the hydraulic medium from the pressure system is controlled in the control device (17) in respect of flow time, flow current and flow direction.

3. Method according to either of claims 1 or 2, characterised in that a rudder blade (1) is used, on the trailing edge of which is arranged a fin (2) which is additionally moved in accordance with the rudder position and in linked mechanically to the rudder blade (1).

## Revendications

1. Procédé de stabilisation d'un navire contre les mouvements de roulis par des mouvements de pivotement en va-et-vient du gouvernail (1), qui est déplacé par une machine à gouverner hydraulique (4), les mouvements de pivotement destinés à assurer la stabilisation devant être produits à une vitesse de rotation supérieure à la vitesse qui existe lorsque le gouvernail (1) est placé de la manière habituelle, le mouvement du gouvernail (1) et le réglage d'un angle de celui-ci étant commandés par une amenée, pouvant être réglée, d'un agent hydraulique à la machine à gouverner (4) et le réglage de cette amenée de l'agent hydraulique ayant lieu en fonction de la position du gouvernail (1) choisie au poste de gouverne pour la tenue de route et en fonction des mouvements de roulis relevés par un capteur de roulis, le procédé de stabilisation étant caractérisé en ce que l'amenée de l'agent hydraulique à la machine à gouverner (4) a lieu par l'intermédiaire d'un appareil de commande (17) à partir d'un système de pression auquel l'agent hydraulique est amené de façon constante jusqu'à ce qu'une pleine pression de service soit atteinte et dans lequel cet agent hydraulique est emmagasiné pendant un arrêt du gouvernail (1) lorsque le gouvernail (1) est placé de la manière habituelle, de même qu'après un mouvement de pivotement lorsque le gouvernail (1) reste à un angle déterminé, et en ce que pour un mouvement du gouvernail (1), l'agent hydraulique est, par l'intermédiaire de l'appareil de commande (17), ouvert, prélevé en même temps sur le volume emmagasiné (14) et sur l'alimentation constante, la portée du gouvernail dans laquelle les mouvements de pivotement stabilisateurs peuvent être produits étant plus petite que la portée du gouvernail maximale, réglable à partir du poste de gouverne, qui est requise pour la gouverne du navire.

2. Procédé suivant la revendication 1, caractérisé en ce que pour le réglage de la vitesse de pivotement et de l'angle de pivotement du gouvernail (1), l'amenée de l'agent hydraulique du système de pression est commandée quant à la durée de passage, quant au débit et quant au sens de passage dans l'appareil de commande (17).

3. Procédé suivant l'une ou l'autre des revendications 1 et 2, caractérisé en ce qu'il est utilisé un safran de gouvernail (1) au côté arrière duquel il est prévu un aileron (2), y accouplé mécaniquement, qui est additionnellement déplacé selon la position du gouvernail.

FIG. 1

FIG. 2

0 129 810

9

FIG. 3